# EUROPÄISCHE PATENTANMELDUNG

(11) **EP 4 699 436 A1**
(43) Veröffentlichungstag der Anmeldung: **25.02.2026**
(21) Anmeldenummer: 24196181.2
(22) Anmeldetag: 23.08.2024
(51) Int. Cl.: A01D 80/02, A01D 89/00, A01D 78/02

(54) **ZINKENWALZE**

(71) Anmelder: Rapid Technic AG, 8956 Killwangen (CH)
(72) Erfinder: Merkofer, Jonas, 5082 Kaisten (CH); Häfeli, Christian, 6332 Hagendorn (CH)
(74) Vertreter: Fenner, Seraina

(57) **Zusammenfassung**

Zinkenwalze für eine Landwirtschaftsmaschine, vorzugsweise für eine Vorrichtung zum Abheben und anschliessenden lockeren Ablegen des auf dem Boden liegenden Mähguts, wobei die Längsachse aufweisende Zinkenwalze eine Walze, stirnseitig angeordnete Verbinder und über die Walze verteilt angeordnete Zinken aufweist, wobei die Walze mindestens eine ringsum angeordnete, parallel zur Längsachse verlaufende Abkantungen aufweisende, längs erstreckende Paneele beinhaltet, wobei die Paneele eine rechtwinklig zur Längsachse verlaufende Krümmung aufweist und über ihre parallel zur Längsachse verlaufenden Schenkel zu einer zylindrischen Walze verbunden ist.

## Beschreibung

Die Erfindung betrifft eine Zinkenwalze für eine Landwirtschaftsmaschine, vorzugsweise für eine Vorrichtung zum Abheben und anschliessenden lockeren Ablegen des auf dem Boden liegenden Mähguts, wobei die Längsachse aufweisende Zinkenwalze eine Walze, stirnseitig angeordnete Verbinder und über die Walze verteilt angeordnete Zinken aufweist.

Aus dem Stand der Technik sind Landwirtschaftsmaschinen mit Zinkenwalzen in unterschiedlichen Anwendungsbereichen bekannt. Sie dienen einerseits dem Aufnehmen von Mähgut beispielsweise auf einen Ladewagen, können aber auch für die Bearbeitung von Böden oder Sträuchern eingesetzt werden. Meist weisen solche Zinkenwalzen eine Zinkensteuerung auf, was eine komplexe und aufwendige Bauweise erfordert und sich in einem hohen Gewicht aufgrund der vielen Eizelteile widerspiegelt.

Die AT 258 009 A offenbart eine landwirtschaftliche Maschine zum Bearbeiten von Halm- und Blattgut. Die Maschine weist vier rotierende Walzen auf an denen Zinken angeordnet sind. Durch die Anordnung von mehreren Walzen weist die Maschine ein hohes Gewicht auf sowie durch die Rotationen dieser Walzen erfolgt die Behandlung des Halm- und Blattguts wenig schonend.

Es ist Aufgabe der Erfindung eine Zinkenwalze für eine Landwirtschaftsmaschine vorzuschlagen, die ein geringes Gewicht aufweist und damit einfach im Handling ist, sowie simpel und kostengünstig in der Herstellung.

Diese Aufgabe wird erfindungsgemäss dadurch gelöst, dass die Walze mindestens eine ringsum angeordnete, parallel zur Längsachse verlaufende Abkantungen aufweisende, längs erstreckende Paneele beinhaltet, wobei die Paneele eine rechtwinklig zur Längsachse verlaufende Krümmung aufweist und über ihre parallel zur Längsachse verlaufenden Schenkel zu einer zylindrischen Walze verbunden ist. Vorzugsweise weist die Walze mindestens zwei ringsum angeordnete, parallel zur Längsachse verlaufende Abkantungen aufweisende, längs erstreckende Paneelen auf, wobei die Paneelen über ihre parallel zur Längsachse verlaufenden Schenkel zu einer zylindrischen Walze verbunden sind.

Die erfindungsgemässe Zinkenwalze für eine Landwirtschaftsmaschine, vorzugsweise für eine Vorrichtung zum Abheben und anschliessenden lockeren Ablegen des auf dem Boden liegenden Mähguts beinhaltet eine Längsachse aufweisende Walze, stirnseitig angeordnete Verbinder und über die Walze verteilt angeordnete Zinken, wobei die Zinkenwalze vorzugsweise in einer Vorrichtung, die durch eine Holmen geführte Arbeitsmaschine betrieben wird, zum Einsatz kommt. Die Walze weist mindestens eine ringsum angeordnete, parallel zur Längsachse verlaufende Abkantungen, längs erstreckende Paneele auf, wobei die Paneele eine rechtwinklig zur Längsachse verlaufende Krümmung aufweist bzw. die rechtwinklig zur Längsachse ersteckenden Seiten der Paneele weisen eine Bogenform auf, die einem Kreissegment der Walze entsprechen. Die Walze weist vorzugsweis mindesten zwei Paneelen auf, speziell bevorzugt sind drei bis zwölf Paneelen für eine Walze. Die einzelnen Paneelen sind über ihre parallel zur Längsachse verlaufenden Schenkel miteinander zu einer zylindrischen Walze verbunden. Vorzugsweise sind die einzelnen Paneelen über ihre beiden äusseren Schenkel miteinander zu einer Walze gefügt. Es ist vorteilhaft, wenn die miteinander zu einer Walze gefügten Paneelen identisch in ihren Abmassen sind. Die Walze ist vorzugsweise über die Arbeitsbreite der Vorrichtung bzw. über die komplette Länge der Walze zylindrisch ausgebildet. Die Walze weist vorzugsweise einen runden Querschnitt mit aneinandergereihten Abkantungen auf, wobei die Abkantungen entlang eines Kreises angeordnet sind. Vorzugsweise weisen die Abkantungen einen Winkel zwischen 45 und 120° auf.

Es ist vorteilhaft, wenn eine Paneele mindestens zwei parallel zur Längsachse verlaufende Abkantungen aufweist. Das heisst, dass vorzugsweise eine Paneele mindestens drei entlang der Längsachse verlaufende Schenkel aufweist.

Vorzugsweise beinhaltet eine Walze mindestens zwei Paneelen, speziell bevorzugt mindestens drei Paneelen. Dies ist abhängig vom Durchmesser und Einsatzgebiet der Walze wie auch von der Grösse der Paneele. Vorzugsweise weist eine Walz zwischen vier und 16 Paneelen auf.

Die Breiten der einzelnen Schenkel einer Paneele sind vorzugsweise gleich. Dies gewährleistet eine regelmässige Anordnung der Abkantungen entlang des Aussendurchmessers der Walze. Dies ermöglicht auch eine regelmässige Anordnung der Zinken am Aussendurchmesser der Walze.

Als vorteilhafte Ausführung hat sich gezeigt, wenn eine Paneele zwischen vier und 14 parallel zur Längsachse verlaufende Abkantungen aufweist. Die Paneele weist aufgrund dessen vorzugsweise fünf bis 15 entlang der Längsachse verlaufende Schenkel auf.

Es ist vorteilhaft, wenn die Verbinder als Kreissegmente ausgebildet sind. Dies ermöglicht eine einfache Montage der Paneelen. Stirnseitig der Paneelen bzw. an der gekrümmten Seite der Paneelen werden die Verbinder angebracht, welche vorzugsweise dieselbe Krümmung bzw. Bogenform wie die Paneele aufweist. Jede Paneele wird mit ihren beiden stirnseitig angeordneten Verbindern vormontiert, wodurch die Verbinder einen geschlossenen Kreisring beim Zusammenfügen der Paneelen zu einer Walze bilden. Vorzugsweise sind die Verbinder aus Kunststoff hergestellt. Alternativ besteht auch die Möglichkeit, dass die Verbinder an den Stirnseiten der Paneelen über die Verbindungsstelle von zwei benachbarten Paneelen rangen, was der Walze eine höhere Festigkeit verleiht.

Vorzugsweise sind an den Verbindern Positionselemente angeordnet, die stirnseitig die Schenkel der Paneelen positionieren. Dies ermöglicht eine einfache und genaue Montage der Walze. Vorzugsweise sind die Positionselemente als zwei längs erstreckende Führungen ausgebildet zwischen die die Stirnseite des Schenkels positioniert bzw. eingeklemmt wird.

Es ist vorteilhaft, wenn die Paneelen miteinander gefügt sind, vorzugsweise durch schweissen, nieten oder schrauben. Dazu werden vorzugsweise die äusseren beiden Schenkel der Paneelen aufeinander gelegt und mit dem entsprechenden Fügeverfahren miteinander verbunden. Aufgrund der Krümmung der Paneelen ergibt sich dann eine runde, zylindrische Walze mit Abkantungen entlang des Aussenumfangs.

Vorzugsweise sind die Paneelen aus Metallblechen hergestellt. Vorzugsweise weist das Metallblech eine Stärke zwischen 1 bis 10 mm auf, was ein problemloses Abkanten gewährleistet.

Als bevorzugte Ausführung hat sich gezeigt, wenn die Paneelen aus Leichtmetallblechen vorzugsweise aus Aluminium gebildet sind. Dies gewährleistet eine leichte Walze und ein einfaches Abkanten. Das Leichtmetallblech weist vorzugsweise eine Dicke zwischen 1 bis 10 mm auf.

Zum einfachen Fixieren und runden Anordnen der stirnseitig angeordneten Verbinder sowie zum Antreiben der Zinkenwalze sind stirnseitig über den Verbindern Nabenscheiben angeordnet. Vorzugsweise gewährleisten die Nabenscheiben auch eine runde Anordnung der Verbinder.

Als vorteilhaft hat sich gezeigt, dass die Zinken in Feldern an der Walze bzw. an der Aussenmantelfläche der Walze angeordnet sind. Mehrere Zinken bzw. eine Zinkenansammlung in einem Bereich der Walze bildet ein Feld und zwischen den einzelnen Feldern hat es leere Bereiche wo an der Walze keine Zinken angeordnet sind. Die Felder können mit gleichvielen Zinken ausgebildet oder aber auch eine unterschiedliche Menge an Zinken aufweisen. Die Felder können regelmässig oder auch unregelmässig über die Walze bzw. die Aussenmantelfläche der Walze angeordnet sein. Die Anordnung der Felder ist individuell auf das Mähgut abzustimmen. Mit der Anordnung der Zinken in Feldern hat sich gezeigt, dass das Mähgut optimal gewendet wird, ohne dass es zu unerwünschten Mähgutansammlungen in Zwischenräumen oder auf der Zinkenwalze kommt. Selbstverständlich ist aber dennoch eine Verteilung der Zinken über die komplette Zinkenwalze möglich.

Es hat sich als vorteilhaft gezeigt, wenn die Zinken nicht ins Zentrum der Walze gerichtet sind bzw. die Zinken schräg bzw. geneigt zur Mittelachse angeordnet sind. Das heisst, dass die Zinken schräg versetzt zur Mittelachse verlaufen. Dadurch ergibt sich der Nachlaufwinkel, welcher durch den fest an der Walze montierten Zinken immer unverändert ist, unabhängig in welcher Lage bzw. Position sich die Walze befindet. Das heisst, bei der Rotation der Zinkenwalze in Arbeitsfahrtrichtung und in Richtung mit den Zinken läuft die Befestigungsstelle des Zinkens an der Walze bzw. der Zinkenfuss der Zinkenspitze immer voraus, wodurch die Zinke über den Boden mitgeschleppt wird bzw. nachläuft. Es ist vorteilhaft, wenn der Zinke senkrecht auf den jeweiligen Schenkel, an dem der Zinke angeordnet ist, ausgerichtet ist.

Vorzugsweise sind die Zinken in einem geneigten Nachlaufwinkel α zur Mittelachse angeordnet. Dieser ermöglicht wie oben beschrieben, dass die Zinken beim über den Boden streifen, das Mähgut unter der Zinkenwalze durchfördern und mitabheben. Vorzugsweise liegt der Nachlaufwinkel α zwischen 10° und 50°.

Es ist vorteilhaft, wenn die Zinken unverstellbar an der Walze angeordnet sind.

Als vorteilhaft hat sich gezeigt, wenn die Zinken aus Kunststoff sind, vorzugsweise Gummi.

Vorzugsweise sind an den Verbindern Vertiefungen angeordnet, um die Nabenscheiben zu zentrieren. Dies gewährleistet, dass die Walze in der Maschine rundläuft und keine Unwucht aufweist.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Zinkenwalze,

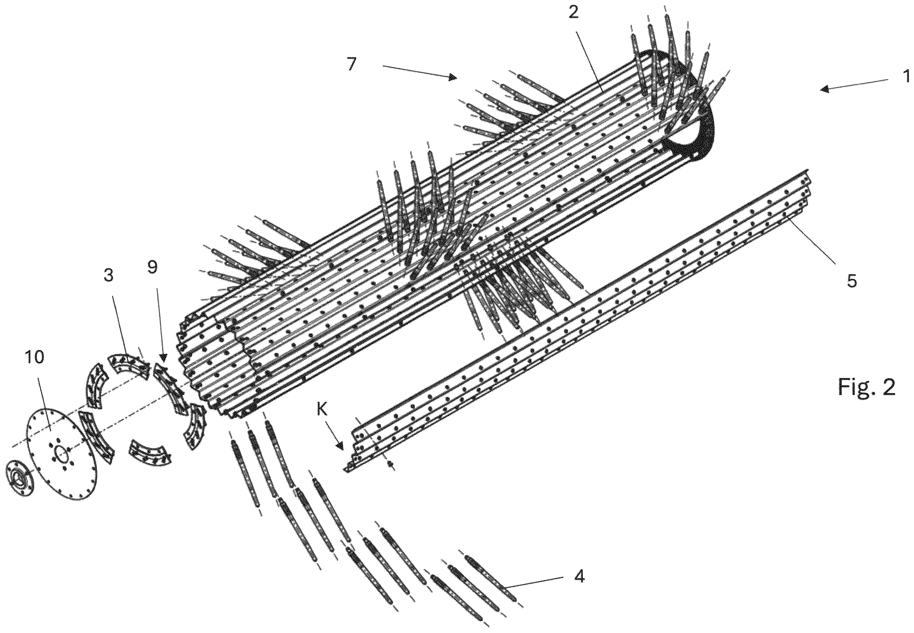

- Fig. 2: eine Explosionsansicht einer erfindungsgemässen Zinkenwalze
- Fig. 3: einen Detailschnitt einer Paneelenverbindungsstelle und eine Zinkenbefestigung und
- Fig. 4: eine stirnseitige Draufsicht einer erfindungsgemässen Zinkenwalze.

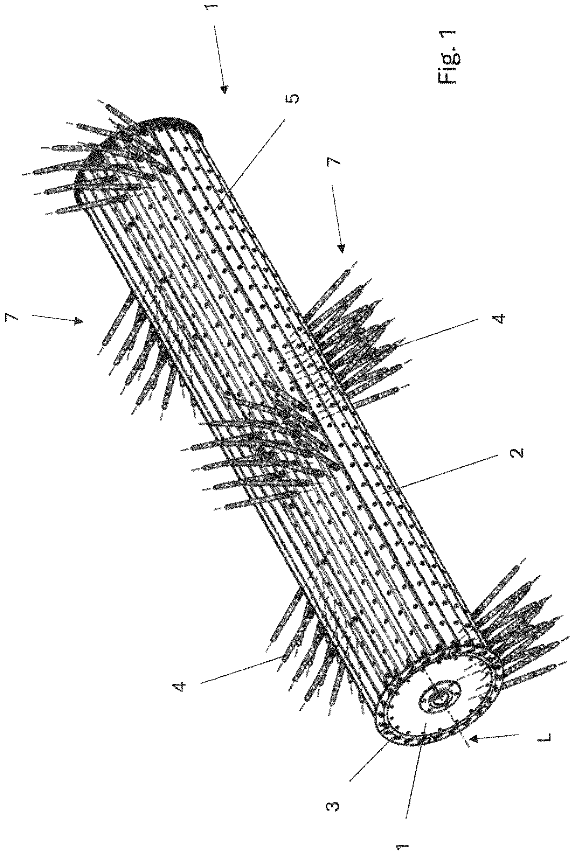

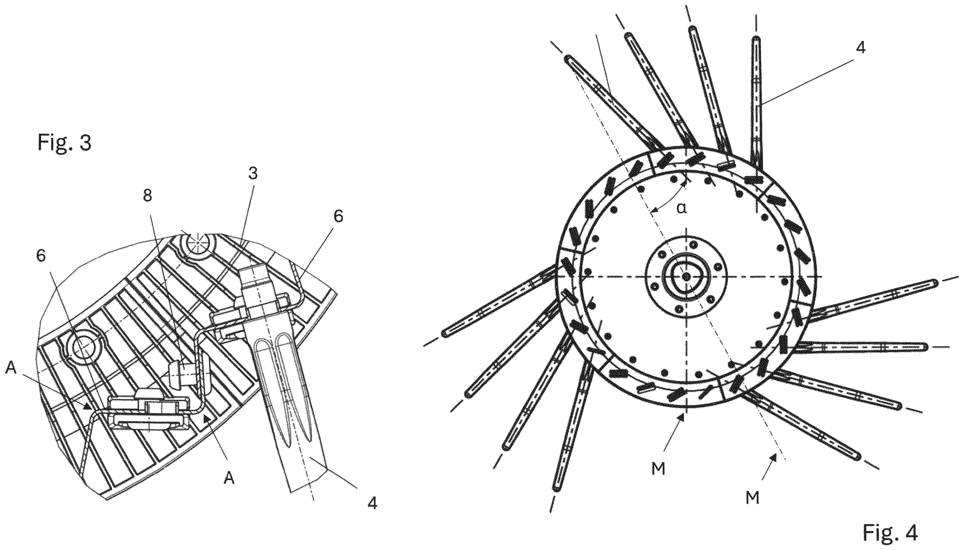

Die in Fig. 1 dargestellte Zeichnung zeigt eine dreidimensional dargestellte erfindungsgemässe Zinkenwalze 1. Die Zinkenwalze 1 wird in Landwirtschaftsmaschinen eingebaut vorzugsweise zum Abheben und anschliessenden lockeren Ablegen des auf dem Boden liegenden Mähguts, kann aber auch für andere Zwecke eingesetzt werden. Die Zinkenwalze 1 weist eine Längsachse L auf um die die Zinkwalze 1 rotiert. Die Zinkenwalze 1 kann in der entsprechenden Vorrichtung horizontal oder vertikal angeordnet werden. Die Zinkenwalze 1 beinhaltet eine Walze 2, stirnseitig angeordnete Verbinder 3 und an der Walze 2 angeordnete Zinken 4. Die Walze 2 weist vorzugsweise mehrere ringsum angeordnete, parallel zur Längsachse L verlaufende Abkantungen aufweisende, längs erstreckende Paneelen 5 auf. Die Paneelen 5 erstrecken sich über die komplette Länge der Walze 2. Wobei jede Paneele 5 vorzugsweise als ein Teil bzw. einteilig ausgebildet ist. Die Paneelen 5 weisen eine rechtwinklig zur Längsachse L verlaufende Krümmung K auf bzw. die rechtwinklig zur Längsachse L ersteckenden Seiten der Paneelen weisen eine Bogenform auf, die einem Kreissegment der Walze entsprechen. Durch das Zusammenfügen der Paneelen 5 über ihre parallel zur Längsachse L verlaufenden Schenkel 6 wird eine zylindrische Walze gebildet. Die Paneelen 5 werden über die Verbinder 3 an den Stirnseiten zu einer Walze 2 mit einem runden Querschnitt zusammengehalten. Vorzugsweise sind die Verbinder 3 als Kreissegmente ausgebildet und weisen sowohl Führungen für die Zentrierungen für die Nabenscheiben 10 als auch Führungen, in denen die Stirnseiten der Schenkel 6 positioniert und ausgerichtet werden, auf. Vorzugsweise sind die Zinken 4 in den dafür vorgesehenen Gewindebohrungen in den Paneelen 5 einzuschrauben. Es hat sich auch als vorteilhaft gezeigt, wenn die Zinken 4 in Feldern 7 an der Walze 2 angeordnet sind und dazwischen keine Zinken 4 an der Walze 2 montiert sind. Ein Feld 7 von Zinken 4 zeichnet sich dadurch aus, dass über einen Bereich mehrere aufeinanderfolgende Zinken 4 entlang der Längsachse L und entlang des Umfangs der Walze 2 angeordnet sind und dass nach einem Feld wieder ein Bereich ohne Zinken 4 erfolgt. Die Felder 7 an einer Walze 2 könne gleich oder auch unterschiedlich gross ausfallen wie sie auch in regelmässigen wie auch unregelmässigen Abständen über die Walze 2 angeordnet sein können. In Fig. 3 ist gut ersichtlich wie zwei Paneelen 5 miteinander mittels eines Niets 8 gefügt sind. Die Paneelen 5 sind vorzugsweise aus Metallblechen besonders bevorzugt aus Leichtmetallblechen hergestellt, das vorzugsweise eine Dicke von 1 bis 10 mmm aufweist. Die Zinken 4 sind vorzugsweise zur Mittelachse M in einem Nachlaufwinkel α angeordnet bzw. sind nicht ins Zentrum der Walze 2 gerichtet. Vorzugsweise ist der Zinken 4 senkrecht auf den Schenkel 6 ausgerichtet auf dem der Zinken 4 angeordnet ist. Abhängig vom Einsatz der Walze kann es für weitere Anwendungen einer Zinkenwalze durchaus Sinn machen, dass die Zinken eine andere Ausrichtung aufweisen, beispielsweise ins Zentrum der Walze.

### Bezugszeichenliste

- 1: Zinkenwalze
- 2: Walze
- 3: Verbinder
- 4: Zinke
- 5: Paneele
- 6: Schenkel
- 7: Zinkenfeld
- 8: Niet
- 9: Positionselement
- 10: Nabenscheibe

- L: Längsachse
- M: Mittelachse
- K: Krümmung
- A: Abkantung
- α: Nachlaufwinkel

## Patentansprüche

1. Zinkenwalze (1) für eine Landwirtschaftsmaschine, vorzugsweise für eine Vorrichtung zum Abheben und anschliessenden lockeren Ablegen des auf dem Boden liegenden Mähguts, wobei die Längsachse (L) aufweisende Zinkenwalze (1) eine Walze (2), stirnseitig angeordnete Verbinder (3) und über die Walze (2) verteilt angeordnete Zinken (4) aufweist, **dadurch gekennzeichnet, dass** die Walze (2) mindestens eine ringsum angeordnete, parallel zur Längsachse (L) verlaufende Abkantungen (A) aufweisende, längs erstreckende Paneele (5) beinhaltet, wobei die Paneele (5) eine rechtwinklig zur Längsachse (L) verlaufende Krümmung (K) aufweist und über ihre parallel zur Längsachse (L) verlaufenden Schenkel (6) zu einer zylindrischen Walze (2) verbunden ist.

2. Zinkenwalze (1) nach Anspruch 1, **dadurch gekennzeichnet, dass** eine Paneele (5) mindestens zwei parallel zur Längsachse (L) verlaufende Abkantungen (A) aufweist.

3. Zinkenwalze (1) nach Anspruch 1, **dadurch gekennzeichnet, dass** eine Paneele (5) zwischen vier und 14 parallel zur Längsachse (L) verlaufende Abkantungen (A) aufweist.

4. Zinkenwalze (1) nach einem der Ansprüche 1 bis 3, **dadurch gekennzeichnet, dass** eine Walze (2) mindestens zwei Paneelen (5) aufweist, wobei die Paneelen über ihre parallel zur Längsachse (L) verlaufenden Schenkel (6) miteinander zu einer zylindrischen Walze (2) verbunden sind.

5. Zinkenwalze (1) nach einem der Ansprüche 1 bis 4, **dadurch gekennzeichnet, dass** Verbinder (3) als Kreissegmente ausgebildet sind.

6. Zinkenwalze (1) nach einem der Ansprüche 1 bis 5, **dadurch gekennzeichnet, dass** an den Verbindern (3) Positionselemente (9) angeordnet sind, die stirnseitig die Schenkel (6) der Paneelen (5) positionieren.

7. Zinkenwalze (1) nach einem der Ansprüche 1 bis 6, **dadurch gekennzeichnet, dass** die Paneelen (5) miteinander gefügt sind, vorzugsweise durch schweissen, nieten oder schrauben.

8. Zinkenwalze (1) nach einem der Ansprüche 1 bis 7, **dadurch gekennzeichnet, dass** die Paneelen (5) jeweils aus einem Metallblech hergestellt sind.

9. Zinkenwalze (1) nach einem der Ansprüche 1 bis 8, **dadurch gekennzeichnet, dass** die Paneelen (5) jeweils aus einem Leichtmetallblech gebildet sind.

10. Zinkenwalze (1) nach einem der Ansprüche 1 bis 9, **dadurch gekennzeichnet, dass** jeweils stirnseitig der Zinkenwalze (1) eine Nabenscheibe (10) angeordnet ist.

11. Zinkenwalze (1) nach einem der Ansprüche 1 bis 10, **dadurch gekennzeichnet, dass** die Zinken (4) in Feldern (7) an der Walze angeordnet sind.

12. Zinkenwalze (1) nach einem der Ansprüche 1 bis 11, **dadurch gekennzeichnet, dass** die Zinken (4) in einem Nachlaufwinkel (α) zur Walze (2) bzw. zur Mittelachse (M) angeordnet sind.

13. Zinkenwalze (1) nach einem der Ansprüche 1 bis 12, **dadurch gekennzeichnet, dass** die Zinken (4) unverstellbar bzw. fest an der Walze (2) angeordnet sind.

14. Zinkenwalze (1) nach einem der Ansprüche 1 bis 13, **dadurch gekennzeichnet, dass** an den Verbindern (3) Vertiefungen angeordnet sind, um die Nabenscheiben (10) zu zentrieren.
